(19) Europäisches Patentamt
European Patent Office
Office européen des brevets

(11) EP 3 979 157 A1

(12) EUROPEAN PATENT APPLICATION
published in accordance with Art. 153(4) EPC

(43) Date of publication:
06.04.2022 Bulletin 2022/14

(51) Int Cl.:
G06Q 10/04 (2012.01)   G06Q 30/02 (2012.01)

(21) Application number: 20898869.1

(22) Date of filing: 23.07.2020

(86) International application number:
PCT/CN2020/103656

(87) International publication number:
WO 2021/114674 (17.06.2021 Gazette 2021/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.12.2019 CN 201911260619

(71) Applicant: ENN Digital Energy Technology Co., Ltd
Beijing 100102 (CN)

(72) Inventors:
• DU, Yahui
  Beijing 100102 (CN)
• WANG, Haixia
  Beijing 100102 (CN)

(74) Representative: Bayramoglu et al.
Mira Office
Kanuni Sultan Süleyman Boulevard 5387
Street Beytepe, floor 12, no:50
06800 Cankaya, Ankara (TR)

(54) METHOD AND APPARATUS FOR DETERMINING STRATEGY FOR MEDIUM- AND LONG-TERM PURCHASE AND SALE OF ELECTRICITY

(57) A method and apparatus for determining a strategy for medium- and long-term purchase and sale of electricity. The method includes: obtaining a post-transaction position held, a post-transaction total position price, a total load expectation, a total risk electricity fee, and an expected electricity fee according to known information of a target time period; and determining a purchase and sale strategy according to the total risk electricity fee and the expected electricity fee. The purchase and sale strategy with the lowest expected electricity fee is obtained by means of certain constraints on the transaction volume of medium- and long-term contracts and upper limit constraints on risk electricity fees. The expected electricity fee is used as an optimized objective function, and comprehensive optimization is performed on the basis of diversified constraints to obtain the optimal electricity fee strategy with load constraints and controllable risks. The method, according to its own situations, can quickly and accurately evaluate a contract value, measure contract risks, and combine purchase and sale strategies, thereby improving the accuracy of evaluation, reducing purchase and sale transaction risks, and determining the optimal purchase and sale strategy.

Obtain a post-transaction position held and a post-transaction total position price according to an initial position held, an initial position price, a number of contracts in fixed proportion, a time-of-use electricity quantity of the contracts in fixed proportion, an average unit price of the contracts in fixed proportion, a number of quantitative contracts, a time-of-use electricity quantity of the quantitative contracts, and an average unit price of the quantitative contracts within a target time period — S10

Preset a target position range, and obtain a total load expectation according to the initial position held, an actual load, a predicted expected value of the actual load, an exposure, the target position range, and the post-transaction position held — S20

Obtain a total risk electricity fee according to the maximum positive fluctuation value of the actual load, the initial position held, the maximum positive fluctuation value of a spot price, the predicted expected value of the actual load, a predicted expected value of the spot price, and the post-transaction position held — S30

Obtain an expected electricity fee according to the exposure, the predicted expected value of the spot price, the initial position held, the initial position price, the post-transaction position held, and the post-transaction total position price — S40

Determine a purchase and sale strategy according to the total risk electricity fee and the expected electricity fee — S50

FIG.1

## Description

### TECHNICAL FIELD

The present disclosure belongs to the field of electricity transaction technologies, and in particular, to a method and apparatus for determining a strategy for medium- and long-term purchase and sale of electricity.

### BACKGROUND

In a traditional mode, the wholesale electricity market is mainly based on medium- and long-term physical contracts. In contract delivery, deviation assessment is generally performed according to a deviation between a wholesale quantity and an actual quantity, and the physical contracts only speak of "total quantity" without the concept of "load curve", having limited transaction categories and windows. After the entry into an electricity spot mode, medium- and long-term contracts in the wholesale market also gradually turn to a financial nature and are settled by settlement of price difference. Taking Guangdong electricity market as an example, there are as many as hundreds of transaction windows on a same target day, and transaction categories are rich (bilateral, listed, centralized, annual, monthly, weekly, day-before and real-time). However, the introduction of "load curve" makes it more difficult to evaluate the value of electricity commodities. Based on the above background, in high-frequency, multi-category and multi-object transaction markets, how to quickly and accurately evaluate a contract value, measure contract risk, and combine purchase and sale strategies according to situations (proxy user load, guarantee and other transaction constraints, risk preference) has become an urgent and necessary need.

### Technical Problem

An objective of the embodiments of the present disclosure is to provide a method and apparatus for determining a strategy for medium- and long-term purchase and sale of electricity, a terminal device, and a computer-readable storage medium, so as to solve the problem in the prior art that it is impossible to quickly and accurately evaluate a contract value, measure contract risks, and combine purchase and sale strategies.

### Technical Solution

In a first aspect of the embodiments of the present disclosure, a method for determining a strategy for medium- and long-term purchase and sale of electricity is provided, including:

obtaining a post-transaction position held and a post-transaction total position price according to an initial position held, an initial position price, a number of contracts in fixed proportion, a time-of-use electricity quantity of the contracts in fixed proportion, an average unit price of the contracts in fixed proportion, a number of quantitative contracts, a time-of-use electricity quantity of the quantitative contracts, and an average unit price of the quantitative contracts within a target time period;

presetting a target position range, and obtaining a total load expectation according to the initial position held, an actual load, a predicted expected value of the actual load, an exposure, the target position range, and the post-transaction position held;

obtaining a total risk electricity fee according to the maximum positive fluctuation value of the actual load, the initial position held, the maximum positive fluctuation value of a spot price, the predicted expected value of the actual load, a predicted expected value of the spot price, and the post-transaction position held;

obtaining an expected electricity fee according to the exposure, the predicted expected value of the spot price, the initial position held, the initial position price, the post-transaction position held, and the post-transaction total position price; and

determining a purchase and sale strategy according to the total risk electricity fee and the expected electricity fee.

In a second aspect of the embodiments of the present disclosure, an apparatus for determining a strategy for medium- and long-term purchase and sale of electricity is provided, including:

an information determination module configured to obtain a post-transaction position held and a post-transaction total position price according to an initial position held, an initial position price, a number of contracts in fixed proportion, an average unit price of the contracts in fixed proportion, a number of quantitative contracts, a time-of-use electricity quantity of the quantitative contracts, and an average unit price of the quantitative contracts within a target time period;

a total load expectation obtaining module configured to preset a target position range, and obtain a total load expectation according to the initial position held, an actual load, a predicted expected value of the actual load, an exposure, the target position range, and the post-transaction position held;

a total risk electricity fee obtaining module configured to obtain a total risk electricity fee according to the maximum positive fluctuation value of the actual load, the initial position held, the maximum positive fluctuation value of a spot price, the predicted expected value of the actual load, a predicted expected value of the spot price, and the post-transaction position held;

an expected electricity fee obtaining module configured to obtain an expected electricity fee according to the exposure, the predicted expected value of the spot price, the initial position held, the initial position price, the post-transaction position held, and the post-transaction total position price; and

a purchase and sale strategy determination module configured to determine a purchase and sale strategy according to the total risk electricity fee and the expected electricity fee.

In a third aspect of the embodiments of the present disclosure, a terminal device is provided, including a memory, a processor and a computer program stored in the memory and executable on the processor, wherein the processor, when executing the computer program, performs steps of the method for determining a strategy for medium- and long-term purchase and sale of electricity.

In a fourth aspect of the embodiments of the present disclosure, a computer-readable storage medium is provided. The computer-readable storage medium stores a computer program. When the computer program is executed by a processor, steps of the method for determining a strategy for medium- and long-term purchase and sale of electricity are performed.

**Beneficial Effects**

The method for determining a strategy for medium- and long-term purchase and sale of electricity according to the embodiments of the present disclosure has at least the following beneficial effects. In the embodiments of the present disclosure, a medium- and long-term contract purchase and sale strategy (multi-contract combination) is formulated based on a purchased electricity quantity. Each strategy has a certain margin relative to an actual load expectation, which is balanced by a spot market. Through an existing position + medium- and long-term transaction + spot market transaction, a risk electricity fee and an expected electricity fee under the strategy are calculated. The purchase and sale strategy with the lowest expected electricity fee is obtained by means of certain constraints on the transaction volume of medium- and long-term contracts and upper limit constraints on risk electricity fees formed by the strategy. The expected electricity fee is used as an optimized objective function, and comprehensive optimization is performed on the basis of diversified constraints to obtain the optimal electricity fee strategy with load constraints and controllable risks. The method, according to its own situations, such as proxy user load, guarantee and other transaction constraints, risk preference, can quickly and accurately evaluate a contract value, measure contract risks, and combine purchase and sale strategies, thereby improving the accuracy of evaluation, reducing purchase and sale transaction risks, and ensuring the optimal purchase and sale transaction. The method enables quick formulation of a strategy and has a simple implementation process, achieving intelligent processing.

**BRIEF DESCRIPTION OF THE DRAWINGS**

In order to more clearly illustrate the technical solutions in the embodiments of the present disclosure, the accompanying drawings used in the description of the embodiments will be briefly introduced below. It is apparent that, the accompanying drawings in the following description are only some embodiments of the present disclosure, and other drawings can be obtained by those of ordinary skill in the art from the provided drawings without creative efforts.

FIG. 1 is a schematic diagram of an implementation process of a method for determining a strategy for medium- and long-term purchase and sale of electricity according to an embodiment of the present disclosure;

FIG. 2 is a schematic diagram of an implementation process of obtaining a total load expectation in the method for determining a strategy for medium- and long-term purchase and sale of electricity according to an embodiment of the present disclosure;

FIG. 3 is a schematic diagram of an implementation process of obtaining a total risk electricity fee in the method for determining a strategy for medium- and long-term purchase and sale of electricity according to an embodiment of the present disclosure;

FIG. 4 is a schematic diagram of an implementation process of obtaining an expected electricity fee in the method for determining a strategy for medium- and long-term purchase and sale of electricity according to an embodiment of the present disclosure;

FIG. 5 is a schematic diagram of an apparatus for determining a strategy for medium- and long-term purchase and sale of electricity according to an embodiment of the present disclosure;

FIG. 6 is a schematic diagram of a total load expectation obtaining module in the apparatus for determining a strategy for medium- and long-term purchase and sale of electricity according to an embodiment of the present disclosure;

FIG. 7 is a schematic diagram of a total risk electricity fee obtaining module in the apparatus for determining a strategy for medium- and long-term purchase and sale of electricity according to an embodiment of the present disclosure;

FIG. 8 is a schematic diagram of an expected electricity fee obtaining module in the apparatus for determining a strategy for medium- and long-term purchase and sale of electricity according to an embodiment of the present disclosure; and

FIG. 9 is a schematic diagram of a terminal device according to an embodiment of the present disclosure.

## DETAILED DESCRIPTION

In the following descriptions, for the purpose of illustration rather than limitation, specific details such as a particular system structure and a technology are proposed for a thorough understanding of the embodiments of the present disclosure. However, it should be understood by those skilled in the art that the present disclosure can also be implemented in other embodiments without the specific details. In other cases, detailed descriptions of well-known apparatuses, circuits and methods are omitted, so that the present disclosure is described without being impeded by the unnecessary details. All other embodiments acquired by those of ordinary skill in the art without creative efforts based on the embodiments of the present disclosure shall fall within the protection scope of the present disclosure. Unless otherwise specified, the technical means used in the embodiments are conventional means well known to those skilled in the art.

It is to be understood that, when used in the specification and the appended claims, the term "include/comprise" specify the presence of the described features, integers, steps, operations, elements and/or components, but may not exclude the presence or addition of one or more other features, integers, steps, operations, elements, components and/or combinations thereof.

It is also to be understood that, the terms used in the specification of the present application are intended only to describe specific embodiments and are not intended to limit the present application. As used in the specification of the present application and the appended claims, the singular forms of "a/an", "one", and "the" are intended to include plural forms, unless otherwise clearly specified by the context.

It is to be further understood that, the term "and/or" used in the specification of the present application and the appended claims refers to any and all possible combinations of one or more of relevant listed items and includes these combinations.

As used in the specification and the appended claims, the term "if' may be interpreted as "when", or "once", or "in response to a determination" or "in response to detection of' depending on the context. Similarly, depending on the context, the phrase "if it is determined that" or "if [a described condition or event] is detected" may be interpreted as "once it is determined that", or "in response to a determination", or "once [a described condition or event] is detected", or "in response to a case where [a described condition or event] is detected".

In order to illustrate the technical solutions described in the present disclosure, specific embodiments are provided below.

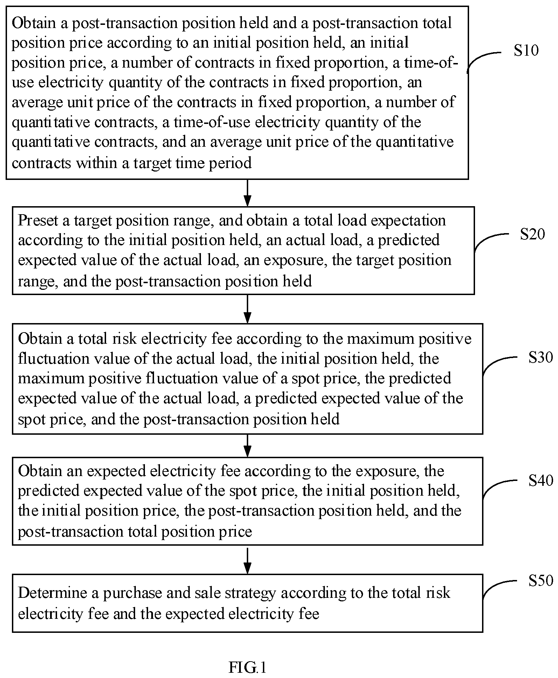

FIG. 1 is a schematic diagram of an implementation process of a method for determining a strategy for medium- and long-term purchase and sale of electricity according to an embodiment of the present disclosure. The method may include the following steps.

In step S10, a post-transaction position held and a post-transaction total position price are obtained according to an initial position held, an initial position price, a number of contracts in fixed proportion, a time-of-use electricity quantity of the contracts in fixed proportion, an average unit price of the contracts in fixed proportion, a number of quantitative contracts, a time-of-use electricity quantity of the quantitative contracts, and an average unit price of the quantitative contracts within a target time period.

For a long-term contract strategy in a spot mode, the existing method generally aims at a standard curve, and also focuses on a pattern standard of a D1/D2/D3 curve specified by transaction on exchange. Buyers and sellers are required only to pay attention to the price, and decision-making is less difficult. However, in bilateral transactions and listed transactions, a contract curve is completely customized, and both parties are required to evaluate the value of the curve by integrating a curve pattern, a price and a position held to make a decision, which is much more difficult.

Off-exchange transactions have many restrictions on a transaction curve, which may be fixed and non-quantitative, or fixed and quantitative. The existing methods generally focus on the former, considering the optimization of a purchase quantity on the premise of a certain pattern of the transaction curve, which cannot evaluate a fixed and quantitative curve.

Under the rules of settlement of price difference, participants in the electricity market are more engaged in the game of financial nature in the wholesale market, rather than the pure physical-level wholesale of electricity. This determines that subjects can achieve arbitrage in the wholesale market through "buy low-sell high". Current methods generally consider only a purchase strategy that meets a physical load demand, and rarely consider a strategy of selling existing contracts in the wholesale market.

Strategy formulation requires prediction of a user load and a spot price, which is difficult to guarantee the accuracy. As a result, any purchase and sale strategy comes with a certain amount of risk. For transaction subjects, a controllable risk is also one of the important evaluation dimensions for the transaction strategy. There is no strategy optimization based on risk control in the existing methods.

Under a known condition, considering that many transaction restrictions in the transaction rules are monthly (such as monthly net transaction constraints), it is assumed in the method that the target period is a whole month or a multiple of a whole month, that is, $i \in [1, c \times d \times 24]$ ($c$ is a number of months and $d$ is a number of days in each month).

Therefore, prices of initial positions held in a known target period are $Q_i^{\text{position}}$, $P_i^{\text{position}}$ ($i \in [1, c \times d \times 24]$) respectively, an actual load in the known target period has a predicted expected value $\eta_i^{Q^{\text{actual}}}$ and a maximum positive fluctuation value $Q_i^{\text{positive fluctuation}}$, a spot price in the known target period has a predicted expected value $\eta_i^{P^{\text{actual}}}$ and a maximum positive fluctuation value $P_i^{\text{positive fluctuation}}$, a time-of-use curve ratio and an average unit price of known $m$ potential contracts in fixed proportion are $r_i^j$, $Pi$ ($j \in [1, m], i \in [1, c \times d \times 24]$) respectively, a time-of-use electricity quantity and an average unit price of known $n$ potential quantitative contracts are $Q_i^k$, $Pk \in [1, n], i \in [1, c \times d \times 24]$) respectively, a known monthly net transaction constraint is $Q^{\text{monthly net}}$, a known monthly cumulative transaction constraint is $Q^{\text{monthly cumulative}}$, a known monthly guarantee constraint surplus is $Q^{\text{guarantee}}$, a known constraint upper limit of risk electricity fees is $P_{\max}^{risk}$, and a known target position range is

$$\left[ r^{\text{lower limit}} \times \sum_{i=1}^{c \times d \times 24} \eta_i^{Q^{\text{actual}}}, \ r^{\text{upper limit}} \times \sum_{i=1}^{c \times d \times 24} \eta_i^{Q^{\text{actual}}} \right].$$

It is assumed that a spot price at a time point in the target period is $P_i^{\text{actual}}$ and an actual load is $Q_i^{\text{actual}}$, both follow normal distribution in medium- and long-term transaction prediction, that is,

$$P_i^{P^{\text{actual}}} = N(\eta_i^{P^{\text{actual}}}, \sigma_i^{2^{P^{\text{actual}}}}), P_i^{Q^{\text{actual}}} = N(\eta_i^{Q^{\text{actual}}}, \sigma_i^{2^{Q^{\text{actual}}}}).$$

There are lots of opportunities in the market to buy and sell contracts with load patterns and prices. In different categories, patterns, durations, electricity quantities and prices of these "curves" are not exactly the same. According to different processing logics of algorithms, the contracts may be classified into two categories. In one category, load curves have determined patterns, a variable total amount (with a step size requirement), and a unit price. In the other category, load curves are directly quantified and have a total price. The former are common in centralized bidding transactions, while the latter is mainly in bilateral and listed forms. A potential contract $j$ with a fixed proportion and indefinite quantity has a time-of-use electricity quantity $r_i^j \times Q^j$ ($i$ is a time-of-use serial number, $j$ is a contract serial number, $r$ is a total ratio of the time-of-use electricity quantity, and $Q$ is a total contract electricity quantity), and a contract unit price $P^j$. A quantitative potential contract $k$ has a time-of-use electricity quantity and a contract unit price $Q_i^k$ and $P^k$ respectively.

It is assumed that a total of $m+n$ potential contracts available for purchase and sale exist currently, including $m$ contracts in fixed proportion with a time-of-use electricity quantity and a unit price $r_i^j \times Q^j$ and $P^j$ ($j \in [1, m], 0 \leq Q^j \leq Q_{\max}^j$) respectively, and $n$ quantitative contracts with a time-of-use electricity quantity and a unit price $r^k \times Q_i^k$ and $P^k$ ($k \in [1, n]$, $r^k = 0$ or 1) respectively, where 0 represents not purchase, and 1 represents purchase; $r^k$ is a coefficient, indicating that purchase or not purchase is feasible. A user may arbitrarily combine $m+n$ contracts under certain constraints (described below) to change the position held and the total position price.

The post-transaction position held is obtained by:

$$\sum_{i=1}^{c \times d \times 24} ( Q_i^{position} + \sum_{j=1}^{m} r_i^{j} \times Q^{j} + \sum_{k=1}^{n} r^{k} \times Q_i^{k} )$$

where $Q_i^{position}$ represents the initial position held, $r_i^{j} \times Q^{j}$ represents the time-of-use electricity quantity of the contracts in fixed proportion, $r^{k} \times Q_i^{k}$ represents the time-of-use electricity quantity of the quantitative contracts, $m$ represents the number of the contracts in fixed proportion, $n$ represents the number of the quantitative contracts, $i$ represents a time-of-use serial number, $j$ represents a serial number of the contracts in fixed proportion, $k$ represents a serial number of the quantitative contracts, $r$ represents a total ratio of the time-of-use electricity quantity, and $Q$ represents a total contract electricity quantity;

the post-transaction total position price is obtained by:

$$\sum_{i=1}^{c \times d \times 24} ( Q_i^{position} \times P_i^{position} + \sum_{j=1}^{m} r_i^{j} \times Q^{j} \times P^{j} + \sum_{k=1}^{n} r^{k} \times Q_i^{k} \times P^{k} )$$

where $P_i^{position}$ represents the initial position price, $P^{j}$ represents the average unit price of the contracts in fixed proportion, and $P^{k}$ represents the average unit price of the quantitative contracts.

It is to be understood that the target period herein is not limited to a whole month, and time or unit time may be set as required, which is not limited herein.

Referring to FIG. 1, further, after the step of obtaining a post-transaction position held and a post-transaction total position price, the following step may be performed.

In step S20, a target position range is preset, and a total load expectation is obtained according to the initial position held, an actual load, a predicted expected value of the actual load, an exposure, the target position range, and the post-transaction position held.

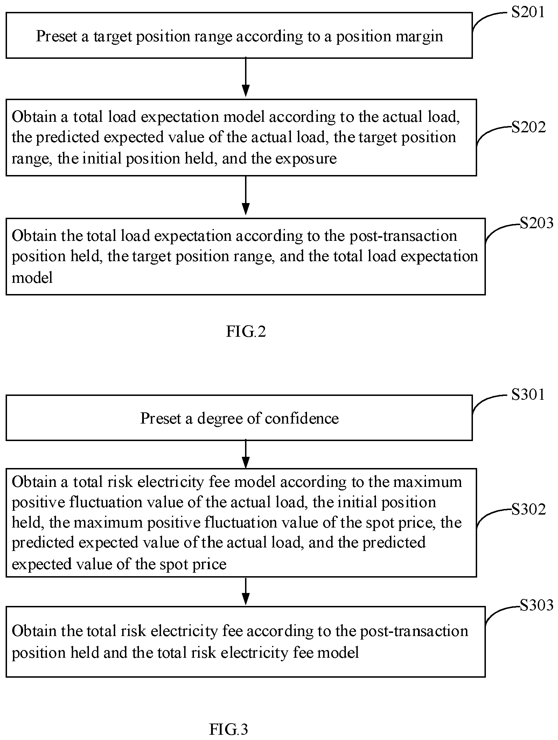

Further, the target position range is required to be preset so as to obtain the total load expectation. FIG. 2 is a schematic diagram of an implementation process of obtaining a total load expectation in the method for determining a strategy for medium- and long-term purchase and sale of electricity according to an embodiment of the present disclosure. In this embodiment, a target position range is preset according to a position margin; a total load expectation model is obtained according to the actual load, the predicted expected value of the actual load, the target position range, the initial position held, and the exposure; and the total load expectation is obtained according to the post-transaction position held, the target position range, and the total load expectation model, the post-transaction position held being in line with at least the target position range. A manner of obtaining the total load expectation may include the following steps.

In step S201, a target position range is preset according to a position margin.

The target position range is:

$$\left[ r^{lower\,limit} \times \sum_{i=1}^{c \times d \times 24} \eta_i^{Q^{actual}} , \mathrm{r}^{upper\,limit} \times \sum_{i=1}^{c \times d \times 24} \eta_i^{Q^{actual}} \right]$$

where $r^{lower\,limit}$ or $r^{upper\,limit}$ represents a preset proportion according to a business condition, $\sum_{i=1}^{c \times d \times 24} \eta_i^{Q^{actual}}$ represents a total load expectation model, $Q_i^{actual}$ represents the actual load, and $\eta_i^{Q^{actual}}$ represents the predicted expected value of the actual load.

In medium- and long-term transactions, considering that there are still multiple transaction windows then, it is generally conscious to reserve a certain position margin for future transaction and set up a target position range. When a target position and a reserved exposure are set, predicted fluctuations are not taken into account, and only the total load expectation $\sum_{i=1}^{c \times d \times 24} \eta_i^{Q^{actual}}$ of the target period is taken as a reference, which is generally determined in proportion, that is, $\left[ r^{lower\,limit} \times \sum_{i=1}^{c \times d \times 24} \eta_i^{Q^{actual}} , \mathrm{r}^{upper\,limit} \times \sum_{i=1}^{c \times d \times 24} \eta_i^{Q^{actual}} \right]$. The target position range is a proportion set by the user according to business conditions. For example, it is expected to purchase 70%-80% positions in this transaction window.

It is to be understood that the target position range herein is determined according to the business condition of the user, and the value is uncertain, ranging from 0% to 100%, which is not limited herein.

In step S202, a total load expectation model is obtained according to the actual load, the predicted expected value of the actual load, the target position range, the initial position held, and the exposure.

The total load expectation model is obtained by:

$$\sum_{i=1}^{c \times d \times 24} \eta_i^{Q^{actual}} = \sum_{i=1}^{c \times d \times 24} Q_i^{position} + \sum_{i=1}^{c \times d \times 24} Q_i^{exposure}$$

$$(\sum_{i=1}^{c \times d \times 24} Q_i^{position} \in \left[ r^{lower\ limit} \times \sum_{i=1}^{c \times d \times 24} \eta_i^{Q^{actual}}, \ r^{upper\ limit} \times \sum_{i=1}^{c \times d \times 24} \eta_i^{Q^{actual}} \right])$$

where $Q_i^{exposure}$ represents the exposure.

A relationship among the concepts of an actual load, a target position, a position held and an exposure is:

$$\sum_{i=1}^{c \times d \times 24} \eta_i^{Q^{actual}} = \sum_{i=1}^{c \times d \times 24} Q_i^{position} + \sum_{i=1}^{c \times d \times 24} Q_i^{exposure}$$

$$(\sum_{i=1}^{c \times d \times 24} Q_i^{position} \in \left[ r^{lower\ limit} \times \sum_{i=1}^{c \times d \times 24} \eta_i^{Q^{actual}}, \ r^{upper\ limit} \times \sum_{i=1}^{c \times d \times 24} \eta_i^{Q^{actual}} \right])$$

In step S203, the total load expectation is obtained according to the post-transaction position held, the target position range, and the total load expectation model, the post-transaction position held being in line with at least the target position range.

The total load expectation is obtained by:

$$\sum_{i=1}^{c \times d \times 24} \eta_i^{Q^{actual}} = \sum_{i=1}^{c \times d \times 24} (Q_i^{position} + \sum_{j=1}^{m} r_i^j \times Q^j + \sum_{k=1}^{n} r^k \times Q_i^k) + \sum_{i=1}^{c \times d \times 24} Q_i^{exposure}$$

$$(\sum_{i=1}^{c \times d \times 24} (Q_i^{position} + \sum_{j=1}^{m} r_i^j \times Q^j + \sum_{k=1}^{n} r^k \times Q_i^k) \in [r^{lower\ limit} \times \sum_{i=1}^{c \times d \times 24} \eta_i^{Q^{actual}}, \ r^{upper\ limit} \times \sum_{i=1}^{c \times d \times 24} \eta_i^{Q^{actual}}]).$$

The post-transaction position held is substituted into the total load expectation model, and the formula is changed into:

$$\sum_{i=1}^{c \times d \times 24} \eta_i^{Q^{actual}} = \sum_{i=1}^{c \times d \times 24} (Q_i^{position} + \sum_{j=1}^{m} r_i^j \times Q^j + \sum_{k=1}^{n} r^k \times Q_i^k) + \sum_{i=1}^{c \times d \times 24} Q_i^{exposure}$$

$$(\sum_{i=1}^{c \times d \times 24} (Q_i^{position} + \sum_{j=1}^{m} r_i^j \times Q^j + \sum_{k=1}^{n} r^k \times Q_i^k) \in [r^{lower\ limit} \times \sum_{i=1}^{c \times d \times 24} \eta_i^{Q^{actual}}, \ r^{upper\ limit} \times \sum_{i=1}^{c \times d \times 24} \eta_i^{Q^{actual}}]).$$

Referring to FIG. 1, further, after the step of obtaining a total load expectation, the following step may be performed.

In step S30, a total risk electricity fee is obtained according to the maximum positive fluctuation value of the actual load, the initial position held, the maximum positive fluctuation value of a spot price, the predicted expected value of the actual load, a predicted expected value of the spot price, and the post-transaction position held.

Further, a degree of confidence is required to be preset so as to obtain the total risk electricity fee. FIG. 3 is a schematic diagram of an implementation process of obtaining a total risk electricity fee in the method for determining a strategy for medium- and long-term purchase and sale of electricity according to an embodiment of the present disclosure. In this embodiment, a degree of confidence is preset; a total risk electricity fee model is obtained according to the maximum positive fluctuation value of the actual load, the initial position held, the maximum positive fluctuation value of the spot price, the predicted expected value of the actual load, and the predicted expected value of the spot price;

and the total risk electricity fee is obtained according to the post-transaction position held and the total risk electricity fee model, the total risk electricity fee being in line with at least a constraint upper limit of risk electricity fees. A manner of obtaining the total risk electricity fee may include the following steps.

In step S301, a degree of confidence is preset.

The risk refers to the total risk electricity fee in the target period, which is a constraint quantity during optimization. That is, the optimization pursues "the optimal electricity fee under a condition of acceptable risk", and calculation of the risk follows the definition in economics (a fluctuation value when the degree of confidence is 95% is regarded as a maximum risk, and the corresponding loss is regarded as the risk).

It is to be understood that the degree of confidence herein may be preset according to an actual problem or situation, ranging from 0% to 100%, which is not limited herein.

In step S302, a total risk electricity fee model is obtained according to the maximum positive fluctuation value of the actual load, the initial position held, the maximum positive fluctuation value of the spot price, the predicted expected value of the actual load, and the predicted expected value of the spot price.

The total risk electricity fee model is obtained by:

$$\sum_{i=1}^{c \times d \times 24} \left( \left( Q_i^{\text{positive fluctuation}} - Q_i^{\text{position}} \right) \times P_i^{\text{positive fluctuation}} - \left( \eta_i^{Q^{\text{actual}}} - Q_i^{\text{position}} \right) \times \eta_i^{P^{\text{actual}}} \right)$$

where $Q_i^{\text{positive fluctuation}}$ represents the maximum positive fluctuation value of the actual load, $P_i^{\text{positive fluctuation}}$ represents the maximum positive fluctuation value of the spot price, and $\eta_i^{P^{\text{actual}}}$ represents the predicted expected value of the spot price.

The "position" here refers to a quantity covered by a user contract, $Q_i^{\text{positive fluctuation}}$ is a maximum fluctuation quantity of load, and $P_i^{\text{positive fluctuation}}$ is a maximum fluctuation quantity of the spot price.

In step S303, the total risk electricity fee is obtained according to the post-transaction position held and the total risk electricity fee model, the total risk electricity fee being in line with at least a constraint upper limit of risk electricity fees.

The total risk electricity fee is obtained by:

$$\sum_{i=1}^{c \times d \times 24} \left( \left( Q_i^{\text{positive fluctuation}} - Q_i^{\text{position}} - \sum_{j=1}^{m} r_i^j \times Q^j - \sum_{k=1}^{n} r^k \times Q_i^k \right) \times P_i^{\text{positive fluctuation}} - \left( \eta_i^{Q^{\text{actual}}} - Q_i^{\text{position}} - \right.\right.$$

$$\left.\left. \sum_{j=1}^{m} r_i^j \times Q^j - \sum_{k=1}^{n} r^k \times Q_i^k \right) \times \eta_i^{P^{\text{actual}}} \right)$$

After the post-transaction position held and the post-transaction total position price are substituted into the total risk electricity fee model, the formula of risk is changed into:

$$\sum_{i=1}^{c \times d \times 24} \left( \left( Q_i^{\text{positive fluctuation}} - Q_i^{\text{position}} - \sum_{j=1}^{m} r_i^j \times Q^j - \sum_{k=1}^{n} r^k \times Q_i^k \right) \times P_i^{\text{positive fluctuation}} - \left( \eta_i^{Q^{\text{actual}}} - Q_i^{\text{position}} - \right.\right.$$

$$\left.\left. \sum_{j=1}^{m} r_i^j \times Q^j - \sum_{k=1}^{n} r^k \times Q_i^k \right) \times \eta_i^{P^{\text{actual}}} \right)$$

Referring to FIG. 1, further, after the step of obtaining a total risk electricity fee, the following step may be performed.

In step S40, an expected electricity fee is obtained according to the exposure, the predicted expected value of the spot price, the initial position held, the initial position price, the post-transaction position held, and the post-transaction total position price.

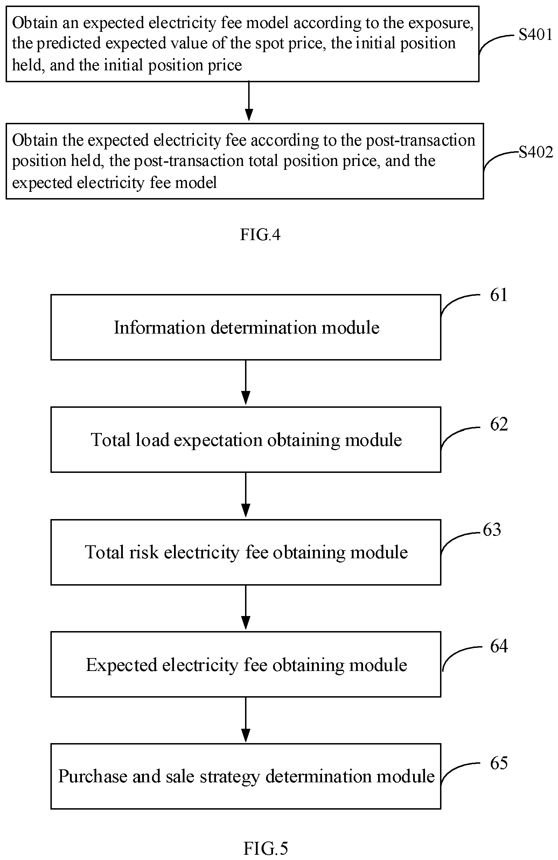

Further, in order to obtain the expected electricity fee, an expected electricity fee model is required to be obtained first. FIG. 4 is a schematic diagram of an implementation process of obtaining an expected electricity fee in the method for determining a strategy for medium- and long-term purchase and sale of electricity according to an embodiment of the present disclosure. In this embodiment, an expected electricity fee model is obtained according to the exposure, the predicted expected value of the spot price, the initial position held, and the initial position price; and the expected electricity fee is obtained according to the post-transaction position held, the post-transaction total position price, and the expected electricity fee model. A manner of obtaining the expected electricity fee may include the following steps.

In step S401, an expected electricity fee model is obtained according to the exposure, the predicted expected value of the spot price, the initial position held, and the initial position price.

The expected electricity fee model is obtained by:

$$\sum_{i=1}^{c \times d \times 24} (Q_i^{\text{exposure}} \times \eta_i^{P^{\text{actual}}} + Q_i^{\text{position}} \times P_i^{\text{position}}).$$

An optimization goal is the lowest risk-free electricity fee, and an original formula is the expected electricity fee model.

In step S402, the expected electricity fee is obtained according to the post-transaction position held, the post-transaction total position price, and the expected electricity fee model.

The expected electricity fee is obtained by:

$$\sum_{i=1}^{c \times d \times 24} ((\eta_i^{Q^{\text{actual}}} - Q_i^{\text{position}} - \sum_{j=1}^{m} r_i^j \times Q^j - \sum_{k=1}^{m} r^k \times Q_i^k) \times \eta_i^{P^{\text{actual}}} + Q_i^{\text{position}} \times P_i^{\text{position}} + \sum_{j=1}^{m} r_i^j \times Q^j \times P^j + \sum_{k=1}^{n} r^k \times Q_i^k \times P^k))$$

The post-transaction position held and the post-transaction total position price are substituted into the expected electricity fee model, and the risk-free electricity fee is changed into:

$$\sum_{i=1}^{c \times d \times 24} ((\eta_i^{Q^{\text{actual}}} - Q_i^{\text{position}} - \sum_{j=1}^{m} r_i^j \times Q^j - \sum_{k=1}^{n} r^k \times Q_i^k) \times \eta_i^{P^{\text{actual}}} + Q_i^{\text{position}} \times P_i^{\text{position}} + \sum_{j=1}^{m} r_i^j \times Q^j \times P^j + \sum_{k=1}^{n} r^k \times Q_i^k \times P^k))$$

Referring to FIG. 1, further, after the step of obtaining a total risk electricity fee and an expected electricity fee, the following step may be performed.

In step S50, a purchase and sale strategy is determined according to the total risk electricity fee and the expected electricity fee.

Transaction constraints mainly include a monthly net contract quantity constraint, a monthly cumulative contract quantity constraint, and a performance guarantee limit constraint. The monthly net contract quantity constraint refers to an upper limit of an algebraic sum of wholesale side transaction contracts (i.e., position held) in a monthly target period, denoted as $Q^{\text{monthly net}}$. The monthly cumulative contract quantity constraint refers to an upper limit of a sum of absolute values of quantities of purchase and sale contracts (i.e., transaction mileage) conducted in a monthly target period, denoted as $Q^{\text{monthly cumulative}}$. The performance guarantee limit constraint refers to a total annual upper limit for an electricity selling company to participate in the contract transaction according to an amount of guarantee pre-paid by the electricity selling company, and an amount of guarantee in a target month is part thereof, denoted as $Q^{\text{guarantee}}$ (the value is generally set by the electricity selling company according to an annual plan and may be regarded as a known quantity during optimization).

The being in line with a monthly net transaction constraint is obtained by:

$$\sum_{i=1}^{c \times d \times 24} (Q_i^{\text{position}} + \sum_{j=1}^{m} r_i^j \times Q^j + \sum_{k=1}^{n} r^k \times Q_i^k) \leq Q^{\text{monthly net}}$$

where $Q^{\text{monthly net}}$ represents the monthly net transaction constraint.

The being in line with a monthly guarantee constraint surplus is obtained by:

$$\sum_{i=1}^{c \times d \times 24} (Q_i^{\text{position}} + \sum_{j=1}^{m} r_i^j \times Q^j + \sum_{k=1}^{n} r^k \times Q_i^k) \leq Q^{\text{guarantee}}$$

where $Q^{\text{guarantee}}$ represents the monthly guarantee constraint surplus.

The being in line with a monthly cumulative transaction constraint is obtained by:

$$\sum_{i=1}^{c \times d \times 24} (\left| Q_i^{\text{position}} \right| + \sum_{j=1}^{m} \left| r_i^j \times Q^j \right| + \sum_{k=1}^{n} \left| r^k \times Q_i^k \right|) \le Q^{\text{monthly cumulative}}$$

where $Q^{\text{monthly cumulative}}$ represents the monthly cumulative transaction constraint.

The target position range meets the following constraint condition:

$$r^{\text{lower limit}} \times \sum_{i=1}^{c \times d \times 24} \eta_i^{Q^{\text{actual}}} \le \sum_{i=1}^{c \times d \times 24} (Q_i^{\text{position}} + \sum_{j=1}^{m} r_i^j \times Q^j + \sum_{k=1}^{n} r^k \times Q_i^k) \le r^{\text{upper limit}} \times \sum_{i=1}^{c \times d \times 24} \eta_i^{P^{\text{actual}}}$$

The total risk electricity fee being in line with at least a constraint upper limit of risk electricity fees is obtained by:

$$\sum_{i=1}^{c \times d \times 24} ((Q_i^{\text{positive fluctuation}} - Q_i^{\text{position}} - \sum_{j=1}^{m} r_i^j \times Q^j - \sum_{k=1}^{n} r^k \times Q_i^k) \times P_i^{\text{positive fluctuation}} - (\eta_i^{Q^{\text{actual}}} - Q_i^{\text{position}} - \sum_{j=1}^{m} r_i^j \times Q^j -$$

$$\sum_{k=1}^{n} r^k \times Q_i^k) \times \eta_i^{P^{\text{actual}}}) \le P_{\text{max}}^{\text{risk}}$$

In the step of determining a purchase and sale strategy according to the total risk electricity fee and the expected electricity fee, the expected electricity fee is minimum during the determination of the purchase and sale strategy, and the following formulas are met:

$$\sum_{i=1}^{c \times d \times 24} (Q_i^{\text{position}} + \sum_{j=1}^{m} r_i^j \times Q^j + \sum_{k=1}^{n} r^k \times Q_i^k) \le Q^{\text{monthly net}} \ ;$$

$$\sum_{i=1}^{c \times d \times 24} (Q_i^{\text{position}} + \sum_{j=1}^{m} r_i^j \times Q^j + \sum_{k=1}^{n} r^k \times Q_i^k) \le Q^{\text{guarantee}} \ ;$$

$$\sum_{i=1}^{c \times d \times 24} (\left| Q_i^{\text{position}} \right| + \sum_{j=1}^{m} \left| r_i^j \times Q^j \right| + \sum_{k=1}^{n} \left| r^k \times Q_i^k \right|) \le Q^{\text{monthly cumulative}} \ ;$$

$$r^{\text{lower limit}} \times \sum_{i=1}^{c \times d \times 24} \eta_i^{Q\text{actual}} \le \sum_{i=1}^{c \times d \times 24} (Q_i^{\text{position}} + \sum_{j=1}^{m} r_i^j \times Q^j + \sum_{k=1}^{n} r^k \times Q_i^k) \le r^{\text{upper limit}} \times \sum_{i=1}^{c \times d \times 24} \eta_i^{Q\text{actual}} \ ;$$

$$\sum_{i=1}^{c \times d \times 24} ((Q_i^{\text{positive fluctuation}} - Q_i^{\text{position}} - \sum_{j=1}^{m} r_i^j \times Q^j - \sum_{k=1}^{n} r^k \times Q_i^k) \times P_i^{\text{positive fluctuation}} - (\eta_i^{Q^{\text{actual}}} - Q_i^{\text{position}} -$$

$$\sum_{j=1}^{m} r_i^j \times Q^j - \sum_{k=1}^{n} r^k \times Q_i^k) \times \eta_i^{P^{\text{actual}}}) \le P_{\text{max}}^{\text{risk}}$$

On the basis of a purchased electricity quantity, the user tries a medium- and long-term contract purchase and sale strategy (multi-contract combination). Each strategy has a certain margin relative to an actual load expectation, which is balanced by a spot market. Through an existing position + medium- and long-term transaction + spot market transaction, a risk electricity fee and an expected electricity fee under the strategy may be calculated. A purchase and sale strategy with the lowest expected electricity fee is found through a certain optimization algorithm. The transaction volume of medium- and long-term contracts has a certain constraint, and the risk electricity fee formed by the strategy has upper limit constraints.

It is to be understood that all the above constraints or minimum values are artificially set. For example, the value of the expected electricity fee may be minimum or maximum. The constraint may be limited to the target position range, not to other constraints and the like. Therefore, provided that they fall within the range of the above idea, they all fall within the protection scope of the present disclosure, which is not limited herein.

It is to be understood that the above English letters and/or symbols are intended only to clarify the meaning of specific parameters referred to in the method, and may also be expressed by other letters or symbols, which is not limited herein.

It is to be understood that the sequence numbers of the steps in the above embodiments do not imply an execution sequence, and the execution sequence of the procedures should be determined according to their functions and internal logic, which is not intended to limit an implementation procedure of the embodiments of the present disclosure in any way.

The method for determining a strategy for medium- and long-term purchase and sale of electricity according to the embodiments of the present disclosure has at least the following beneficial effects. In the embodiments of the present disclosure, a post-transaction position held and a post-transaction total position price are obtained according to an initial position held, an initial position price, the number of contracts in fixed proportion, a time-of-use electricity quantity of the contracts in fixed proportion, an average unit price of the contracts in fixed proportion, the number of quantitative contracts, a time-of-use electricity quantity of the quantitative contracts, and an average unit price of the quantitative contracts within a target time period; presetting a target position range, and a total load expectation is obtained according to the initial position held, an actual load, a predicted expected value of the actual load, an exposure, the target position range, and the post-transaction position held; a total risk electricity fee is obtained according to the maximum positive fluctuation value of the actual load, the initial position held, the maximum positive fluctuation value of a spot price, the predicted expected value of the actual load, a predicted expected value of the spot price, and the post-transaction position held; an expected electricity fee is obtained according to the exposure, the predicted expected value of the spot price, the initial position held, the initial position price, the post-transaction position held, and the post-transaction total position price; and a purchase and sale strategy is determined according to the total risk electricity fee and the expected electricity fee. The method, according to its own situations, such as proxy user load, guarantee and other transaction constraints, risk preference, can quickly and accurately evaluate a contract value, measure contract risks, and combine purchase and sale strategies, thereby improving the accuracy of evaluation, reducing purchase and sale transaction risks, and ensuring the optimal purchase and sale transaction. The method enables quick formulation of a strategy and has a simple implementation process, achieving intelligent processing.

A further objective of the embodiment of the present disclosure is to provide an apparatus for determining a strategy for medium- and long-term purchase and sale of electricity. FIG. 5 is a schematic diagram of an apparatus for determining a strategy for medium- and long-term purchase and sale of electricity according to an embodiment of the present disclosure. For ease of description, only parts related to the embodiment of the present disclosure are shown.

Referring to FIG. 5, an apparatus for evaluating trend similarity of a device model includes an information determination module 61, a total load expectation obtaining module 62, a total risk electricity fee obtaining module 63, an expected electricity fee obtaining module 64 and a purchase and sale strategy determination module 65. The information determination module 61 is configured to obtain a post-transaction position held and a post-transaction total position price according to an initial position held, an initial position price, the number of contracts in fixed proportion, a time-of-use electricity quantity of the contracts in fixed proportion, an average unit price of the contracts in fixed proportion, the number of quantitative contracts, a time-of-use electricity quantity of the quantitative contracts, and an average unit price of the quantitative contracts within a target time period. The total load expectation obtaining module 62 is configured to preset a target position range, and obtain a total load expectation according to the initial position held, an actual load, a predicted expected value of the actual load, an exposure, the target position range, and the post-transaction position held. The total risk electricity fee obtaining module 63 is configured to obtain a total risk electricity fee according to the maximum positive fluctuation value of the actual load, the initial position held, the maximum positive fluctuation value of a spot price, the predicted expected value of the actual load, a predicted expected value of the spot price, and the post-transaction position held. The expected electricity fee obtaining module 64 is configured to obtain an expected electricity fee according to the exposure, the predicted expected value of the spot price, the initial position held, the initial position price, the post-transaction position held, and the post-transaction total position price. The purchase and sale strategy determination module 65 is configured to determine a purchase and sale strategy according to the total risk electricity fee and the expected electricity fee.

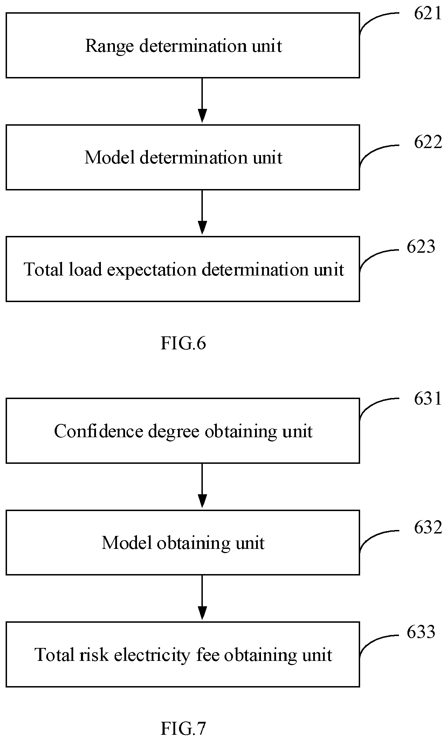

Referring to FIG. 6, further, the total load expectation obtaining module 62 includes a range determination unit 621, a model determination unit 622 and a total load expectation determination unit 623. The range determination unit 621 is configured to preset a target position range according to a position margin. The model determination unit 622 is configured to obtain a total load expectation model according to the actual load, the predicted expected value of the actual load, the target position range, the initial position held, and the exposure. The total load expectation determination unit 623 is configured to obtain the total load expectation according to the post-transaction position held, the target position range, and the total load expectation model, the post-transaction position held being in line with at least the target position range.

Referring to FIG. 7, further, the total risk electricity fee obtaining module 63 includes a confidence degree obtaining unit 631, a model obtaining unit 632 and a total risk electricity fee obtaining unit 633. The confidence degree obtaining unit 631 is configured to preset a degree of confidence. The model obtaining unit 632 is configured to obtain a total risk electricity fee model according to the maximum positive fluctuation value of the actual load, the initial position held, the maximum positive fluctuation value of the spot price, the predicted expected value of the actual load, and the predicted expected value of the spot price. The total risk electricity fee obtaining unit 633 is configured to obtain the total risk electricity fee according to the post-transaction position held and the total risk electricity fee model.

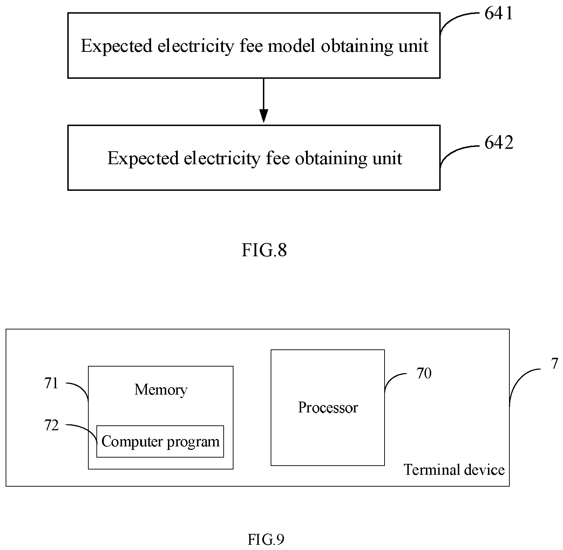

Referring to FIG. 8, further, the expected electricity fee obtaining module 64 includes an expected electricity fee model obtaining unit 641 and an expected electricity fee obtaining unit 642. The expected electricity fee model obtaining unit 641 is configured to obtain an expected electricity fee model according to the exposure, the predicted expected value of the spot price, the initial position held, and the initial position price. The expected electricity fee obtaining unit 642 is configured to obtain the expected electricity fee according to the post-transaction position held, the post-transaction total position price, and the expected electricity fee model.

FIG. 9 is a schematic diagram of a terminal device according to an embodiment of the present disclosure. As shown in FIG. 9, the terminal device 7 includes a processor 70, a memory 71 and a computer program 72 stored in the memory 71 and executable on the processor 70. The processor 70, when executing the computer program 72, performs steps of the method for obtaining a target object state, for example, steps S10 to S50 shown in FIG. 1 to FIG. 4.

The terminal device 7 may be a computing device such as a desktop computer, a notebook, a palmtop or a cloud server. The terminal device may include, but is not limited to, the processor 70 and the memory 71. Those skilled in the art may understand that, FIG. 9 is only an example of the terminal device 7, and does not constitute a limitation on the terminal device 7, which may include more or fewer components than those shown in the figure, or combine some components, or different components. For example, the terminal device may further include an input/output device, a network access device, a bus, and so on.

The processor 70 may be a Central Processing Unit (CPU), other general-purpose processors, Digital Signal processors (DSPs), Application Specific Integrated Circuits (ASICs), Field-programmable Gate Arrays (FPGAs) or other programmable logic devices, discrete gates or transistor logic devices, discrete hardware components, and so on. The general-purpose processors may be microprocessors or any conventional processors.

The memory 71 may be an internal storage unit of the terminal device 7, for example, a hard disk or memory of the terminal device 7. The memory 71 may also be an external storage device of the terminal device 7, such as a plug-in hard disk, a Smart Media Card (SMC), a Secure Digital (SD) card, or a Flash Card provided on the terminal device 7. Further, the memory 71 may further include both the internal storage unit and the external storage device of the terminal device 7. The memory 71 is configured to store the computer program and other programs and data required by the terminal device. The memory 71 may be further configured to temporarily store data that has been or to be outputted.

The integrated modules/units may be stored in a computer-readable storage medium if implemented in a form of software functional units and sold or used as independent products. Based on such understanding, some or all procedures in the methods in the above embodiments implemented in the present application may be accomplished by a computer program instructing related hardware, the computer program may be stored in a computer-readable storage medium, and when the computer program is executed, the steps in the above method embodiments may be implemented. The computer program includes computer program code, which may be in a form of source code, object code, an executable file or in some intermediate forms. The computer-readable medium may include any entity or device capable of carrying the computer program code, a recording medium, a USB disk, a portable hard disk, a magnetic disk, an optical disk, a computer memory, a Read-Only Memory (ROM), a Random Access Memory (RAM), an electric carrier signal, a telecommunication signal, a software distribution medium, and so on. It is to be noted that the contents included in the computer-readable medium may be appropriately increased or decreased as required by legislation and patent practice in the jurisdiction. For example, in some jurisdictions, the computer-readable medium does not include electrical carrier signals and telecommunications signals according to legislation and patent practice.

Specifically, an embodiment of the present application further provides a computer-readable storage medium. The computer-readable storage medium may be the computer-readable storage medium included in the memory in the above embodiment, or a computer-readable storage medium that exists alone and is not assembled into the terminal device. The computer-readable storage medium stores one or more computer programs.

A computer-readable storage medium is provided. The computer-readable storage medium stores a computer program. When the computer program is executed by a processor, steps of the method for determining a strategy for medium- and long-term purchase and sale of electricity are performed.

It may be clearly understood by those skilled in the art that, for convenient and brief description, division of the above functional modules and modules is used as an example for illustration. In practical application, the above functions can be allocated to different functional units and modules and implemented as required, that is, an internal structure of the apparatus is divided into different functional units or modules to accomplish all or some of the functions described above. The functional units or modules in the embodiments may be integrated into one processing unit, or each of the units may exist alone physically, or two or more units are integrated into one unit, and the integrated unit or module may be implemented in a form of hardware or in a form of a software functional unit. In addition, specific names of all the functional units or modules are merely for facilitating the differentiation, but are not intended to limit the protection scope of the present application. For a specific working process of the units or modules in the above apparatus, reference may be made to the corresponding process in the above method embodiments, which is not described in detail herein.

In the above embodiments of the present disclosure, the description of each embodiment has its own emphasis. For a part not detailed or described in one embodiment, reference may be made to relevant description of other embodiments.

Those of ordinary skill in the art would appreciate that the units and algorithmic steps of the examples described in combination with the embodiments disclosed herein can be implemented by electronic hardware or a combination of computer software and electronic hardware. Whether these functions are performed by hardware or software depends on a specific application and design constraints of the technical solution. Technical professionals may implement the described functions in different methods for each particular application, but such implementation should not be considered beyond the scope of the present disclosure.

In the embodiments according to the present disclosure, it is to be understood that the disclosed apparatus/terminal device and methods can be implemented in other ways. For example, the embodiment of the apparatus/terminal device described above is merely schematic. For example, the division of the modules or units is merely logical function division, and there may be other division manners in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between apparatuses or units may be implemented in an electric form, a mechanical form, or other forms.

The units described as separate parts may or may not be physically separate, and parts displayed as units may or may not be physical units, may be located at one position, or may be distributed on a plurality of network units. Some or all of the units may be selected according to actual needs to achieve the objectives of the solutions of the embodiments.

In addition, the functional units in the embodiments of the present disclosure may be integrated into one processing unit, or each of the units may exist alone physically, or two or more units are integrated into one unit. The integrated unit may be implemented in a form of hardware or in a form of a software functional unit.

The above embodiments are merely intended to describe the technical solutions of the present disclosure, but not to limit the present disclosure. Although the present disclosure is described in detail with reference to the foregoing embodiments, those of ordinary skill in the art should understand that they may still make modifications to the technical solutions described in the foregoing embodiments or make equivalent replacements to some technical features thereof. Such modifications or replacements do not cause the essence of the corresponding technical solutions to depart from the spirit and scope of the technical solutions of the embodiments of the present disclosure.

**Claims**

1. A method for determining a strategy for medium- and long-term purchase and sale of electricity, comprising:

   obtaining a post-transaction position held and a post-transaction total position price according to an initial position held, an initial position price, a number of contracts in fixed proportion, a time-of-use electricity quantity of the contracts in fixed proportion, an average unit price of the contracts in fixed proportion, a number of quantitative contracts, a time-of-use electricity quantity of the quantitative contracts, and an average unit price of the quantitative contracts within a target time period;

   presetting a target position range, and obtaining a total load expectation according to the initial position held, an actual load, a predicted expected value of the actual load, an exposure, the target position range, and the post-transaction position held;

   obtaining a total risk electricity fee according to the maximum positive fluctuation value of the actual load, the initial position held, the maximum positive fluctuation value of a spot price, the predicted expected value of the actual load, a predicted expected value of the spot price, and the post-transaction position held;

   obtaining an expected electricity fee according to the exposure, the predicted expected value of the spot price, the initial position held, the initial position price, the post-transaction position held, and the post-transaction total position price; and

   determining a purchase and sale strategy according to the total risk electricity fee and the expected electricity fee.

2. The method for determining a strategy for medium- and long-term purchase and sale of electricity according to claim 1, wherein in the step of obtaining a post-transaction position held and a post-transaction total position price, the post-transaction position held is obtained by:

$$\sum_{i=1}^{c \times d \times 24} (Q_i^{\text{position}} + \sum_{j=1}^{m} r_i^{j} \times Q^{j} + \sum_{k=1}^{n} r^{k} \times Q_i^{k})$$

where $Q_i^{\text{position}}$ represents the initial position held, $r_i^{j} \times Q^{j}$ represents the time-of-use electricity quantity of the contracts in fixed proportion, $r^{k} \times Q_i^{k}$ represents the time-of-use electricity quantity of the quantitative contracts, $m$ represents the number of the contracts in fixed proportion, $n$ represents the number of the quantitative contracts, $i$ represents a time-of-use serial number, $j$ represents a serial number of the contracts in fixed proportion, $k$ represents a serial number of the quantitative contracts, $r$ represents a total ratio of the time-of-use electricity quantity, and $Q$ represents a total contract electricity quantity;

the post-transaction total position price is obtained by:

$$\sum_{i=1}^{c \times d \times 24} (Q_i^{\text{position}} \times P_i^{\text{position}} + \sum_{j=1}^{m} r_i^{j} \times Q^{j} \times P^{j} + \sum_{k=1}^{n} r^{k} \times Q_i^{k} \times P^{k})$$

where $P_i^{\text{position}}$ represents the initial position price, $P^{j}$ represents the average unit price of the contracts in fixed proportion, and $P^{k}$ represents the average unit price of the quantitative contracts.

3. The method for determining a strategy for medium- and long-term purchase and sale of electricity according to claim 2, wherein the post-transaction position held is in line with at least a monthly net transaction constraint and a monthly guarantee constraint surplus, and a sum of absolute values of the post-transaction position held is in line with at least a monthly cumulative transaction constraint, wherein the being in line with a monthly net transaction constraint is obtained by:

$$\sum_{i=1}^{c \times d \times 24} (Q_i^{\text{position}} + \sum_{j=1}^{m} r_i^{j} \times Q^{j} + \sum_{k=1}^{n} r^{k} \times Q_i^{k}) \leq Q^{\text{monthly net}}$$

where $Q^{\text{monthly cumulative}}$ represents the monthly net transaction constraint;

the being in line with a monthly guarantee constraint surplus is obtained by:

$$\sum_{i=1}^{c \times d \times 24} (Q_i^{\text{position}} + \sum_{j=1}^{m} r_i^{j} \times Q^{j} + \sum_{k=1}^{n} r^{k} \times Q_i^{k}) \leq Q^{\text{guarantee}}$$

where $Q^{\text{guarantee}}$ represents the monthly guarantee constraint surplus; and
the being in line with a monthly cumulative transaction constraint is obtained by:

$$\sum_{i=1}^{c \times d \times 24} (\left| Q_i^{\text{position}} \right| + \sum_{j=1}^{m} \left| r_i^{j} \times Q^{j} \right| + \sum_{k=1}^{n} \left| r^{k} \times Q_i^{k} \right|) \leq Q^{\text{monthly cumulative}}$$

where $Q^{\text{monthly cumulative}}$ represents the monthly cumulative transaction constraint.

4. The method for determining a strategy for medium- and long-term purchase and sale of electricity according to claim 2, wherein the step of obtaining a total load expectation comprises:

presetting a target position range according to a position margin, the target position range being:

$$\left[ r^{\text{lower limit}} \times \sum_{i=1}^{c \times d \times 24} \eta_i^{Q^{\text{actual}}}, \ r^{\text{upper limit}} \times \sum_{i=1}^{c \times d \times 24} \eta_i^{Q^{\text{actual}}} \right]$$

where $r^{\text{lower limit}}$ or $r^{\text{upper limit}}$ represents a preset proportion according to a business condition, $\sum\limits_{i=1}^{c \times d \times 24} \eta_i^{Q^{\text{actual}}}$ represents a total load expectation model, $Q_i^{actual}$ represents the actual load, and $\eta_i^{Q^{\text{actual}}}$ represents the predicted expected value of the actual load;

obtaining a total load expectation model according to the actual load, the predicted expected value of the actual load, the target position range, the initial position held, and the exposure, the total load expectation model being obtained by:

$$\sum_{i=1}^{c \times d \times 24} \eta_i^{Q^{\text{actual}}} = \sum_{i=1}^{c \times d \times 24} Q_i^{\text{position}} + \sum_{i=1}^{c \times d \times 24} Q_i^{\text{exposure}}$$

$$(\sum_{i=1}^{c \times d \times 24} Q_i^{\text{position}} \in [r^{\text{lower limit}} \times \sum_{i=1}^{c \times d \times 24} \eta_i^{Q^{\text{actual}}}, r^{\text{upper limit}} \times \sum_{i=1}^{c \times d \times 24} \eta_i^{Q^{\text{actual}}}])$$

where $Q_i^{\text{exposure}}$ represents the exposure; and

obtaining the total load expectation according to the post-transaction position held, the target position range, and the total load expectation model, the post-transaction position held being in line with at least the target position range, the total load expectation being obtained by:

$$(\sum_{i=1}^{c \times d \times 24} \eta_i^{Q^{\text{actual}}} = \sum_{i=1}^{c \times d \times 24} (Q_i^{\text{position}} + \sum_{j=1}^{m} r_i^j \times Q^j + \sum_{k=1}^{n} r^k \times Q_i^k) + \sum_{i=1}^{c \times d \times 24} Q_i^{\text{exposure}}$$

$$(\sum_{i=1}^{c \times d \times 24} (Q_i^{\text{position}} + \sum_{j=1}^{m} r_i^j \times Q^j + \sum_{k=1}^{n} r^k \times Q_i^k) \in [r^{\text{lower limit}} \times \sum_{i=1}^{c \times d \times 24} \eta_i^{Q^{\text{actual}}}, r^{\text{upper limit}} \times \sum_{i=1}^{c \times d \times 24} \eta_i^{Q^{\text{actual}}}]).$$

5. The method for determining a strategy for medium- and long-term purchase and sale of electricity according to claim 4, wherein the total position range meets the following constraint condition:

$$r^{\text{lower limit}} \times \sum_{i=1}^{c \times d \times 24} \eta_i^{Q^{\text{actual}}} \leq \sum_{i=1}^{c \times d \times 24} (Q_i^{\text{position}} + \sum_{j=1}^{m} r_i^j \times Q^j + \sum_{k=1}^{n} r^k \times Q_i^k) \leq r^{\text{upper limit}} \times \sum_{i=1}^{c \times d \times 24} \eta_i^{Q^{\text{actual}}}$$

6. The method for determining a strategy for medium- and long-term purchase and sale of electricity according to claim 4, wherein the step of obtaining a total risk electricity fee comprises:

presetting a degree of confidence;
obtaining a total risk electricity fee model according to the maximum positive fluctuation value of the actual load, the initial position held, the maximum positive fluctuation value of the spot price, the predicted expected value of the actual load, and the predicted expected value of the spot price, the total risk electricity fee model being obtained by:

$$\sum_{i=1}^{c \times d \times 24} ((Q_i^{\text{positive fluctuation}} - Q_i^{\text{position}}) \times P_i^{\text{positive fluctuation}} - (\eta_i^{Q^{\text{actual}}} - Q_i^{\text{position}}) \times \eta_i^{P^{\text{actual}}})$$

where $Q_i^{\text{positive fluctuation}}$ represents the maximum positive fluctuation value of the actual load, $P_i^{\text{positive fluctuation}}$ represents the maximum positive fluctuation value of the spot price, and $\eta_i^{P^{\text{actual}}}$ represents the predicted expected value of the spot price; and

obtaining the total risk electricity fee according to the post-transaction position held and the total risk electricity fee model, the total risk electricity fee being in line with at least a constraint upper limit of risk electricity fees, the total risk electricity fee being obtained by:

$$\sum_{i=1}^{c \times d \times 24} ((Q_i^{\text{positive fluctuation}} - Q_i^{\text{position}} - \sum_{j=1}^{m} r_i^{j} \times Q^{j} - \sum_{k=1}^{n} r^{k} \times Q_i^{k}) \times P_i^{\text{positive fluctuation}} - (\eta_i^{Q^{\text{actual}}} - Q_i^{\text{position}} -$$

$$\sum_{j=1}^{m} r_i^{j} \times Q^{j} - \sum_{k=1}^{n} r^{k} \times Q_i^{k}) \times \eta_i^{P^{\text{actual}}}) \quad ;$$

the total risk electricity fee being in line with at least a constraint upper limit of risk electricity fees being obtained by:

$$\sum_{i=1}^{c \times d \times 24} ((Q_i^{\text{positive fluctuation}} - Q_i^{\text{position}} - \sum_{j=1}^{m} r_i^{j} \times Q^{j} - \sum_{k=1}^{n} r^{k} \times Q_i^{k}) \times P^{\text{positive fluctuation}} - (\eta_i^{Q^{\text{actual}}} - Q_i^{\text{position}} - \sum_{j=1}^{m} r_i^{j} \times Q^{j} -$$

$$\sum_{k=1}^{n} r^{k} \times Q_i^{k}) \times \eta_i^{P^{\text{actual}}}) \leq P_{\max}^{\text{risk}}$$

7. The method for determining a strategy for medium- and long-term purchase and sale of electricity according to claim 6, wherein the step of obtaining an expected electricity fee comprises:

obtaining an expected electricity fee model according to the exposure, the predicted expected value of the spot price, the initial position held, and the initial position price, the expected electricity fee model being obtained by: and

$$\sum_{i=1}^{c \times d \times 24} (Q_i^{\text{exposure}} \times \eta_i^{P^{\text{actual}}} + Q_i^{\text{position}} \times P_i^{\text{position}})$$

obtaining the expected electricity fee according to the post-transaction position held, the post-transaction total position price, and the expected electricity fee model, the expected electricity fee being obtained by:

$$\sum_{i=1}^{c \times d \times 24} ((\eta_i^{Q^{\text{actual}}} - Q_i^{\text{position}} - \sum_{j=1}^{m} r_i^{j} \times Q^{j} - \sum_{k=1}^{n} r^{k} \times Q_i^{k}) \times \eta_i^{P^{\text{actual}}} + Q_i^{\text{position}} \times P_i^{\text{position}} + \sum_{j=1}^{m} r_i^{j} \times Q^{j} \times P^{j} +$$

$$\sum_{k=1}^{n} r^{k} \times Q_i^{k} \times P^{k})$$

8. The method for determining a strategy for medium- and long-term purchase and sale of electricity according to claim 7, wherein in the step of determining a purchase and sale strategy according to the total risk electricity fee and the expected electricity fee, the expected electricity fee is minimum during the determination of the purchase and sale strategy, and the following formulas are met:

$$\sum_{i=1}^{c \times d \times 24} (Q_i^{\text{position}} + \sum_{j=1}^{m} r_i^{j} \times Q^{j} + \sum_{k=1}^{n} r^{k} \times Q_i^{k}) \leq Q^{\text{monthly net}} \quad ;$$

$$\sum_{i=1}^{c \times d \times 24} (Q_i^{\text{position}} + \sum_{j=1}^{m} r_i^{j} \times Q^{j} + \sum_{k=1}^{n} r^{k} \times Q_i^{k}) \leq Q^{\text{guarantee}} \quad ;$$

$$\sum_{i=1}^{c \times d \times 24} (|Q_i^{\text{position}}| + \sum_{j=1}^{m} |r_i^{j} \times Q^{j}| + \sum_{k=1}^{n} |r^{k} \times Q_i^{k}|) \leq Q^{\text{monthly cumulative}} \quad ;$$

$$r^{\text{lower limit}} \times \sum_{i=1}^{c \times d \times 24} \eta_i^{Q^{\text{actual}}} \leq \sum_{i=1}^{c \times d \times 24} (Q_i^{\text{position}} + \sum_{j=1}^{m} r_i^{j} \times Q^{j} + \sum_{k=1}^{n} r^{k} \times Q_i^{k}) \leq r^{\text{upper limit}} \times \sum_{i=1}^{c \times d \times 24} \eta_i^{Q^{\text{actual}}} \quad ;$$

$$\sum_{i=1}^{c \times d \times 24} ((Q_i^{\text{positive fluctuation}} - Q_i^{\text{position}} - \sum_{j=1}^{m} r_i^j \times Q^j - \sum_{k=1}^{n} r^k \times Q_i^k) \times P_i^{\text{positive fluctuation}} - (\eta_i^{Q^{\text{actual}}} - Q_i^{\text{position}} - \sum_{j=1}^{m} r_i^j \times Q^j -$$

$$\sum_{k=1}^{n} r^k \times Q_i^k) \times \eta_i^{P^{\text{actual}}}) \leq P_{\text{max}}^{\text{risk}}$$

9. An apparatus for determining a strategy for medium- and long-term purchase and sale of electricity, comprising:

an information determination module configured to obtain a post-transaction position held and a post-transaction total position price according to an initial position held, an initial position price, a number of contracts in fixed proportion, a time-of-use electricity quantity of the contracts in fixed proportion, an average unit price of the contracts in fixed proportion, a number of quantitative contracts, a time-of-use electricity quantity of the quantitative contracts, and an average unit price of the quantitative contracts within a target time period;

a total load expectation obtaining module configured to preset a target position range, and obtain a total load expectation according to the initial position held, an actual load, a predicted expected value of the actual load, an exposure, the target position range, and the post-transaction position held;

a total risk electricity fee obtaining module configured to obtain a total risk electricity fee according to the maximum positive fluctuation value of the actual load, the initial position held, the maximum positive fluctuation value of a spot price, the predicted expected value of the actual load, a predicted expected value of the spot price, and the post-transaction position held;

an expected electricity fee obtaining module configured to obtain an expected electricity fee according to the exposure, the predicted expected value of the spot price, the initial position held, the initial position price, the post-transaction position held, and the post-transaction total position price; and

a purchase and sale strategy determination module configured to determine a purchase and sale strategy according to the total risk electricity fee and the expected electricity fee.

10. A terminal device, comprising a memory, a processor and a computer program stored in the memory and executable on the processor, wherein the processor, when executing the computer program, performs steps of the method according to claim 1.

Obtain a post-transaction position held and a post-transaction total position price according to an initial position held, an initial position price, a number of contracts in fixed proportion, a time-of-use electricity quantity of the contracts in fixed proportion, an average unit price of the contracts in fixed proportion, a number of quantitative contracts, a time-of-use electricity quantity of the quantitative contracts, and an average unit price of the quantitative contracts within a target time period ⟋ S10

Preset a target position range, and obtain a total load expectation according to the initial position held, an actual load, a predicted expected value of the actual load, an exposure, the target position range, and the post-transaction position held ⟋ S20

Obtain a total risk electricity fee according to the maximum positive fluctuation value of the actual load, the initial position held, the maximum positive fluctuation value of a spot price, the predicted expected value of the actual load, a predicted expected value of the spot price, and the post-transaction position held ⟋ S30

Obtain an expected electricity fee according to the exposure, the predicted expected value of the spot price, the initial position held, the initial position price, the post-transaction position held, and the post-transaction total position price ⟋ S40

Determine a purchase and sale strategy according to the total risk electricity fee and the expected electricity fee ⟋ S50

FIG.1

Preset a target position range according to a position margin — S201

Obtain a total load expectation model according to the actual load, the predicted expected value of the actual load, the target position range, the initial position held, and the exposure — S202

Obtain the total load expectation according to the post-transaction position held, the target position range, and the total load expectation model — S203

FIG.2

Preset a degree of confidence — S301

Obtain a total risk electricity fee model according to the maximum positive fluctuation value of the actual load, the initial position held, the maximum positive fluctuation value of the spot price, the predicted expected value of the actual load, and the predicted expected value of the spot price — S302

Obtain the total risk electricity fee according to the post-transaction position held and the total risk electricity fee model — S303

FIG.3

| Obtain an expected electricity fee model according to the exposure, the predicted expected value of the spot price, the initial position held, and the initial position price | S401 |

| Obtain the expected electricity fee according to the post-transaction position held, the post-transaction total position price, and the expected electricity fee model | S402 |

FIG.4

| Information determination module | 61 |

| Total load expectation obtaining module | 62 |

| Total risk electricity fee obtaining module | 63 |

| Expected electricity fee obtaining module | 64 |

| Purchase and sale strategy determination module | 65 |

FIG.5

```
┌─────────────────────────────────────────┐
│                                          │        621
│          Range determination unit        │
│                                          │
└─────────────────────────────────────────┘
                    │
                    ▼
┌─────────────────────────────────────────┐
│                                          │        622
│          Model determination unit        │
│                                          │
└─────────────────────────────────────────┘
                    │
                    ▼
┌─────────────────────────────────────────┐
│                                          │        623
│  Total load expectation determination unit │
│                                          │
└─────────────────────────────────────────┘
```

FIG.6

```
┌─────────────────────────────────────────┐
│                                          │        631
│       Confidence degree obtaining unit    │
│                                          │
└─────────────────────────────────────────┘
                    │
                    ▼
┌─────────────────────────────────────────┐
│                                          │        632
│            Model obtaining unit           │
│                                          │
└─────────────────────────────────────────┘
                    │
                    ▼
┌─────────────────────────────────────────┐
│                                          │        633
│    Total risk electricity fee obtaining unit │
│                                          │
└─────────────────────────────────────────┘
```

FIG.7

Expected electricity fee model obtaining unit — 641

Expected electricity fee obtaining unit — 642

FIG.8

Memory — 71

Computer program — 72

Processor — 70

Terminal device — 7

FIG.9

## INTERNATIONAL SEARCH REPORT

| International application No. |
| --- |
| **PCT/CN2020/103656** |

**A. CLASSIFICATION OF SUBJECT MATTER**

G06Q 10/04(2012.01)i; G06Q 30/02(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 电力, 售电, 购电, 中长期, 交易, 负荷, 风险, 策略, power, electricity, purchase, selling, medium and long term, transaction, load, risk, strategy

**C. DOCUMENTS CONSIDERED TO BE RELEVANT**

| Category* | Citation of document, with indication, where appropriate, of the relevant passages | Relevant to claim No. |
| --- | --- | --- |
| PX | CN 111027770 A (XINAO SHUNENG TECHNOLOGY CO., LTD.) 17 April 2020 (2020-04-17)<br>   description, paragraphs [0035]-[0141], and figures 1-9 | 1-10 |
| A | 陈玮 等 (CHEN, Wei et al.). "计及负荷和电价不确定性的电力零售公司购电组合优化 (Optimal Portfolio Strategies of Purchasing Electricity for Electricity Retail Companies Considering Load and Electricity Price Uncertainties)"<br>电力建设 (Electric Power Construction), Vol. 37, No. 7, 01 July 2016 (2016-07-01), ISSN: 1000-7229,<br>   pp. 55-60 | 1-10 |
| A | CN 109598608 A (GUANGDONG ELECTRIC POWER TRANSACTION CENTER CO., LTD.) 09 April 2019 (2019-04-09)<br>   entire document | 1-10 |
| A | CN 110197297 A (XIN'AO SHUNENG TECHNOLOGY CO., LTD.) 03 September 2019 (2019-09-03)<br>   entire document | 1-10 |
| A | US 2004181478 A1 (SIEMENS POWER TRANSMISSION & DISTRIBUTION, INC.) 16 September 2004 (2004-09-16)<br>   entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 October 2020** | **29 October 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/103656**

| Patent document cited in search report | | | Publication date (day/month/year) | Patent family member(s) | | | Publication date (day/month/year) |
|---|---|---|---|---|---|---|---|
| CN | 111027770 | A | 17 April 2020 | None | | | |
| CN | 109598608 | A | 09 April 2019 | None | | | |
| CN | 110197297 | A | 03 September 2019 | None | | | |
| US | 2004181478 | A1 | 16 September 2004 | US | 7353201 | B2 | 01 April 2008 |

Form PCT/ISA/210 (patent family annex) (January 2015)